# EUROPEAN PATENT APPLICATION

(11) **EP 4 641 659 A1**
(43) Date of publication of application: **29.10.2025**
(21) Application number: 24863246.5
(22) Date of filing: 06.09.2024
(51) Int. Cl.: H01M 4/133, H01M 4/134, H01M 4/131, H01M 4/36, H01M 4/587, H01M 4/38, H01M 4/48, H01M 10/0525, H01M 10/0562, H01M 10/0585

(54) **NEGATIVE ELECTRODE AND LITHIUM ION SECONDARY BATTERY COMPRISING NEGATIVE ELECTRODE**

(30) Priority: 06.09.2023 KR 20230118210; 05.09.2024 KR 20240120630
(71) Applicant: LG Energy Solution, Ltd., Seoul 07335 (KR)
(72) Inventor: JUNG, Yi Jin, Daejeon 34122 (KR); SONG, Min Sang, Daejeon 34122 (KR); CHOI, Ran, Daejeon 34122 (KR); YOM, Jeeho, Daejeon 34122 (KR)
(74) Representative: Goddar, Heinz J.
(86) International application number: PCT/KR2024/013481
(87) International publication number: WO 2025/053667

(57) **Abstract**

The present invention provides a negative electrode comprising a current collector and an active material layer, wherein the active material layer comprises carbon material particles, metal particles, and metal oxide particles, and a lithium-ion secondary battery comprising the negative electrode.

## Description

### [Technical Field]

This application claims the benefit of priority to Korean Patent Application No. 10-2023-0118210, filed September 6, 2023, and Korean Patent Application No. 10-2024-0120630, filed September 5, 2024, the disclosures of which are incorporated herein by reference in their entirety.

The present invention relates to a negative electrode and a lithium-ion secondary battery comprising the negative electrode.

### [Related Art]

Recently, all-solid-state secondary batteries using solid-state electrolytes as electrolytes have been attracting attention. To improve the energy density of these all-solid-state secondary batteries, the use of lithium as the negative electrode active material has been proposed. Lithium's capacitance density (capacity per unit weight) is about 10 times that of graphite, which is commonly used as a negative electrode active material. Therefore, when using lithium as the negative electrode active material, it is possible to thin out the all-solid-state secondary battery while increasing the power output.

As all-solid-state lithium-ion secondary batteries, for example, anodeless lithium-ion secondary batteries comprising a negative electrode active material layer comprising a metal forming an alloy with lithium and a carbon material are known.

The anodeless lithium-ion secondary battery as described above is driven by a mechanism in which metallic lithium precipitates from the negative electrode active material layer and between the negative electrode active material layer and the current collector when charging, and ionizes and migrates toward the positive electrode when discharging.

The negative electrode active material layer is formed by carbon materials and metal materials such as Ag, and various materials are required to improve the drive characteristics and lifetime characteristics of the battery.

### [Prior Art Reference]

### [Patent Reference]

Korean Laid-open Patent Publication No. 10-2015-0101310

### [Detailed Description of the Invention]

### [Technical Problem]

The present invention aims to provide a negative electrode that can improve the initial efficiency, drive characteristics, and lifetime characteristics of the battery, and a lithium-ion secondary battery comprising the negative electrode.

### [Technical Solution]

To accomplish the above objectives, the present invention provides a negative electrode comprising a current collector and an active material layer,
wherein the active material layer comprises carbon material particles, metal particles, and metal oxide particles.

The present invention also provides a lithium-ion secondary battery comprising the negative electrode; a positive electrode; and an electrolyte disposed between the negative electrode and positive electrode.

### [Advantageous Effects]

The negative electrode of the present invention comprises a negative electrode active material layer in the form of a mixture of carbon material particles, metal particles and metal oxide particles, which has the effect of improving the initial efficiency, drive characteristics, and lifetime characteristics of the battery.

Furthermore, by including the negative electrode active material layer, the lithium-ion secondary battery of the present invention provides excellent initial efficiency, drive characteristics, and lifetime characteristics.

### [Brief Description of Drawing]

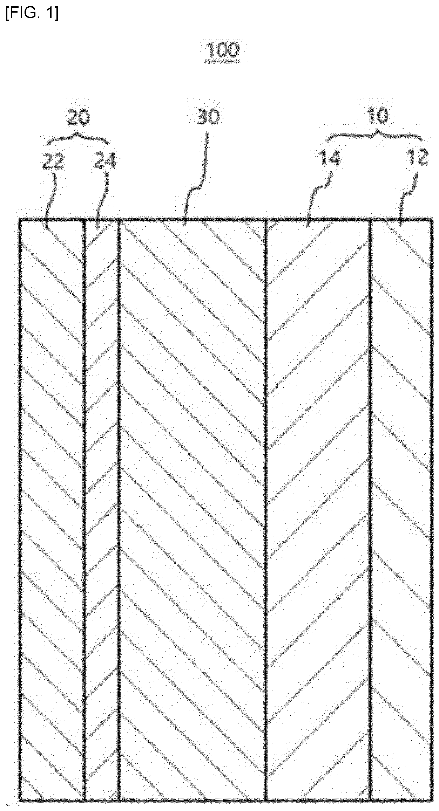

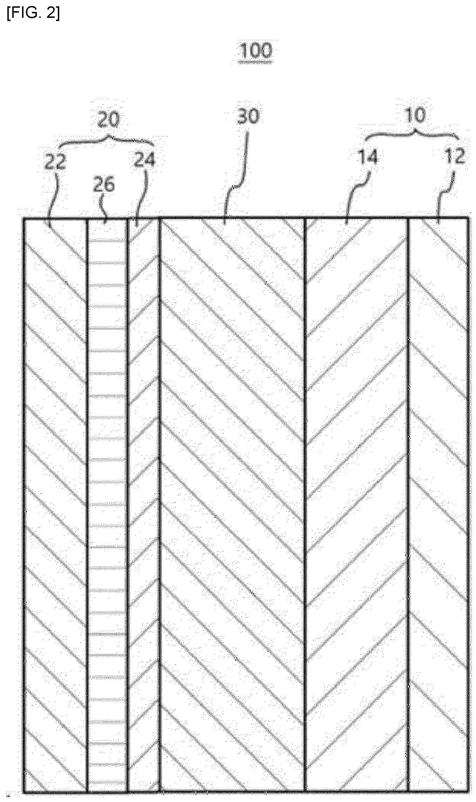

FIGs. 1 and 2 are schematic cross-sectional views of the structure of the lithium-ion secondary battery of the present invention.

### [Best Mode]

Hereinafter, the present invention will be described in more detail to provide a better understanding of the present invention.

The terms and words used in this specification and claims are not to be construed in their ordinary or dictionary sense, but rather in a sense and concept consistent with the technical idea of the present invention, based on the principle that the inventor may define the concept of a term as he/her sees fit to best describe his/her invention. Further, the terminology used herein is used to describe exemplary examples only and is not intended to limit the invention. Expressions in the singular include the plural unless the context clearly indicates otherwise.

When a component is referred to as being "connected to, comprised in, or installed on" another component, it should be understood that it may be directly connected or installed on the other component, but that there may be other components in between. On the other hand, when a component is referred to as being "directly connected to or installed on" another component, it should be understood that there is no other component in between. Other expressions that describe relationships between components, such as "on top of" and "directly on top of", or "between" and "directly between", or "neighboring" and "directly neighboring", should be interpreted similarly.

As used herein, the term "combination" includes mixtures, alloys, reaction products, and the like, unless specifically indicated to the contrary.

The negative electrode of the present invention includes a current collector and an active material layer,
wherein the active material layer comprises carbon material particles, metal particles, and metal oxide particles.

In one example of the present invention, a weight ratio of a weight of the carbon material particles and a total weight of the metal particles and the metal oxide particles included in the active material layer may be 5.1 to 8.5 : 1.5 to 4.9, 5.6 to 8.5 : 1.5 to 4.4, 6 to 8.5 : 1.5 to 4.4, or 6 to 8.5 : 1.5 to 4.

If the weight ratio of carbon material particles is less than 5.1, the storage capacity of lithium is reduced, resulting in a decrease in overall capacity and a decrease in high-rate discharge characteristics, and metal particles and metal oxide particles are unevenly mixed with carbon material, which is prone to lithium dendrites during battery operation, making it difficult to construct a stable electrode. In addition, if the weight ratio is above 8.5, the content of metal particles and metal oxide particles is insufficient to form an alloy with lithium, making it difficult to realize the benefit of lowering the alloying activation energy.

If the weight ratio of metal particles and metal oxide particles is less than 1.5, it is not enough to form an alloy with lithium, so it is difficult to realize the benefit of lowering the alloying activation energy, and if it exceeds 4.9, the content of carbon material particles becomes insufficient, so that the carbon material particles, and metal particles and metal oxide particles are unevenly mixed, and it is easy to generate lithium dendrites during battery operation, so it is difficult to form a stable electrode. It is also undesirable because it reduces the storage capacity of lithium, which leads to overall capacity degradation and a decrease in high rate discharge characteristics.

In one example of the present invention, the metal particles and metal oxide particles may be included in a weight ratio of 1 : 1 to 10, preferably 1 : 2 to 10, more preferably 1 : 2 to 9, and still more preferably 1 : 2.3 to 8. If the weight ratio of metal oxide particles is less than 1, it is undesirable because it may cause insufficient rate performance improvement by the combination of metal particles and metal oxide particles, and if it exceeds 10, it is undesirable because the content of metal particles is insufficient, and the formation of alloy of metal particles and lithium does not sufficiently occur.

In one example of the present invention, the carbon material particles may be, for example, amorphous carbon material particles. However, carbon material particles are not limited to amorphous particles. Specific examples of amorphous carbon materials may include, but are not limited to, carbon black, such as acetylene black, furnace black, and ketjen black, graphene, or combinations thereof.

When the amorphous carbon material particles comprise pores, the pores may have a size of 1 nm or less, preferably 0.5 nm or less. However, it may be further preferred that the amorphous carbon material particles do not contain pores. This is because, if the amorphous carbon material particles include pores, lithium may precipitate inside the pores, and such lithium may be deactivated, and the amount of deactivated lithium may increase as the charge and discharge are repeated.

The pore size of the amorphous carbon material particles can be measured, for example, by nitrogen adsorption experiments or by transmission electron microscopy.

In one example of the present invention, the metal particles may be, for example, one or more selected from the group consisting of Al, Zn, Ag, Li, In, and Ti, and preferably one or more selected from the group consisting of In, Al, Zn, Ag, and Li.

In one example of the present invention, the metal oxide particles may be, for example, at least one selected from the group consisting of Al₂O₃, ZnO, AgO, Li₂O, TiO₂, In₂O₃, and GeO₂, and preferably at least one selected from the group consisting of TiO₂, In₂O₃, Al₂O₃, ZnO, AgO, and Li₂O.

In one example of the present invention, the carbon material particles, metal particles, and metal oxide particles in the active material may be randomly mixed.

In one example of the present invention, the carbon material particles having a particle size (D50) of 10 nm to 150 nm, preferably 20 nm to 100 nm, more preferably 20 nm to 45 nm may be used.

In one example of the present invention, the metal particles having a particle size (D50) of 5 nm to 200 nm, preferably 10 nm to 150 nm, more preferably 10 nm to 100 nm may be used.

In one example of the present invention, the metal oxide particles having a particle size (D50) of 10 nm to 1000 nm, preferably 10 nm to 500 nm, more preferably 10 nm to 300 nm may be used.

In the present invention, the particle size may be measured using a particle size analyzer. For example, it can be measured using the Mastersizer 3000 (Malvern panalytical) instrument.

In one example of the present invention, the carbon material particles may comprise 3 to 10 at% oxygen based on the total elements contained in the carbon material particles. In the above, if the oxygen content is less than 3 at%, it is undesirable because the surface roughness of the active material layer is reduced, and if it exceeds 10 at%, it is undesirable because the performance of the battery is reduced due to side reactions with the solid electrolyte.

The lower limit value of the oxygen content may be 3.5 at% or more, 4 at% or more, or 4.5 at% or more. Further, the upper limit value of the content may be 9.5 at% or less, 9 at% or less, 8 at% or less, 7.5 at% or less, 7 at% or less, 6.5 at% or less, 6 at% or less, or 5.5 at% or less. The oxygen content may be a range consisting of a combination of the lower and upper limit values. Specifically, the oxygen content may be more preferably 5 to 10 at%.

In one example of the present invention, the oxygen may be present in the form of functional groups bonded to the carbon material particles. Further, the functional group may comprise one or more selected from the group consisting of carboxylic groups, hydroxy groups, ether groups, ester groups, aldehyde groups, carbonyl groups, and amide groups.

The carbon material particles containing 3 to 10 at% oxygen may be prepared, for example, by oxidizing the carbon material. Specifically, oxygen functional groups can be introduced to the surface of the carbon material by treating the carbon material with an acid and reacting with stirring at a temperature of 25°C to 60°C. The type of acid is not particularly limited and can be any type that is capable of introducing oxygen functional groups to the surface of the carbon material. The acid can be, for example, sulfuric acid, nitric acid, or mixtures thereof, and an oxidizing agent such as potassium permanganate can also be used.

The carbon material containing oxygen can be either directly synthesized or purchased.

The content of oxygen and other elements in the carbon material can be measured using photoelectron spectroscopy (XPS or ESCA). For example, it can be measured using the K-Alpha (Thermo Fisher Scientific) instrument.

In one example of the present invention, the composition of the carbon material particles comprising oxygen may comprise, for example, the following:

**[Table 1]**

| | Carbon black sample 1 | | Carbon black sample 2 | | Carbon black sample 3 | |
|---|---|---|---|---|---|---|
| Ingredients | Average (at%) | Deviation | Average (at%) | Deviation | Average (at%) | Deviation |
| O | 5.2 | 0.1 | 2.6 | 0.2 | 1.3 | 0.2 |
| C | 94.5 | 0.1 | 97.2 | 0.2 | 98.3 | 0.2 |
| S | 0.3 | 0.04 | 0.3 | 0.03 | 0.4 | 0.04 |

In one example of the present invention, the oxygen may be present on the surface of the carbon material particles. The surface does not mean only the outer surface of the carbon material particles, but includes the surface of the pores, if present.

In one example of the present invention, the active material layer may comprise 55 to 85% by weight carbon material particles, 13 to 43% by weight metal particles and metal oxide particles, and 2 to 12% by weight binder. The binder may be, for example, a resin material such as styrene butadiene rubber (SBR), polytetrafluoroethylene, polyvinylidene fluoride, polyethylene, or the like. The binder may comprise one or more selected from such resin materials.

In one example of the present invention, the carbon material particles, metal particles, and metal oxide particles may be included in the form of a randomly mixed active material composite.

In anodeless batteries, the negative electrode active material layer is formed as a very thin film with a micro-thickness, but conventional active material composites are very difficult to form with a small particle size. In other words, if the particle size of the active material composite is too large for a micro-thin film, it is difficult to form a negative electrode active material layer with a good surface roughness, and this decrease in surface roughness causes a decrease in the driving characteristics of the battery.

The present invention solves the above problems of the prior art. In other words, the active material composite of the present invention forms an active material composite with a significantly smaller particle size compared to those using conventional carbon materials. The carbon material particles forming the active material composite contain at least 3 at% oxygen and are well mixed with metal particles and metal oxide particles, and are characterized in that each component is uniformly distributed. This makes it possible to prepare active material composites with excellent component homogeneity. It also makes it possible to prepare a small, uniformly sized active material composite for the same reasons as above.

In one example of the present invention, the active material composite may be organized by one or more bonds selected from chemical bonding of carbon material particles with metal particles and metal oxide particles, van der Waals bonding, and bonding by a binder. The chemical bonding may occur between the metal particles or metal oxide particles and the oxygen contained in the carbon material.

In one example of the present invention, the particle size (D50) of the active material composite may be 0.1 µm to 0.5 µm. The upper limit value of the particle size may be 0.4 µm or 0.3 µm.

Further, the maximum particle size of the active material composite may be 3 µm or less, 2 µm or less, 1.5 µm or less, 1 µm or less.

If the particle size of the active material composite is too large for a micro-thin film, it is difficult to form a negative electrode active material layer with a good surface roughness, and the driving characteristics of the battery are degraded, so it is very important to make the particle size of the active material composite small.

The reason for the deterioration of the drive characteristics of the above battery is that when the surface roughness of the negative electrode active material layer is large, there is not enough contact with the electrolyte layer in the direction of electrolyte side, and it is not conducive to uniform precipitation of lithium in the direction of negative electrode current collector side.

In an anodeless lithium-ion secondary battery, the thickness of the negative electrode active material layer can be formed in the range of 1 µm to 100 µm, or 10 µm to 60 µm in general, and can be formed in a thickness of 10 µm, 20 µm, 30 µm, 40 µm, 50 µm, or the like in particular.

For example, if an active material composite with a particle size of 10 µm is used to form a negative electrode active material layer with a thickness of 20 µm, it is obvious that it is difficult to form a desirable surface roughness.

It is preferable if the maximum particle size of the active material composite is 3 µm or less, as the surface roughness improvement effect can be obtained more reliably. On the other hand, if the maximum particle size exceeds 3 µm, it may be difficult to achieve good surface roughness when forming a thin film.

The particle size of the active material composite may be measured using a particle size analyzer. For example, it can be measured using the Mastersizer 3000 (Malvem panalytical) instrument.

The present invention also provides a lithium-ion secondary battery comprising a negative electrode; a positive electrode; and an electrolyte disposed between the negative electrode and positive electrode.

The lithium-ion secondary battery may be an anodeless battery.

By including the negative electrode active material layer of the present invention, the lithium-ion secondary battery provides improved drive characteristics and lifetime characteristics.

In one example of the present invention, the solid electrolyte may be a sulfide-based solid electrolyte.

In one example of the present invention, the lithium-ion secondary battery may be an anodeless battery.

Examples of the present invention will be described in more detail below.

### <Composition of an all-solid-state lithium-ion secondary battery>

FIG. 1 is a cross-sectional view illustrating a schematic configuration of an all-solid-state lithium-ion secondary battery according to one example of the present invention.

The all-solid-state lithium-ion secondary battery (100) according to one example of the present invention is a so-called lithium-ion secondary battery, which is charged and discharged by the movement of lithium ions between the positive electrode (10) and the negative electrode (20). Specifically, the all-solid-state lithium-ion secondary battery (100) comprises a positive electrode (10), a negative electrode (20), and a solid electrolyte layer (30) disposed between the positive electrode (10) and the negative electrode (20), as shown in FIG. 1.

### (1) Positive electrode

As shown in FIG. 1, the positive electrode (10) includes a positive electrode current collector (12) and a positive electrode active material layer (14) which are disposed in turn toward the negative electrode (20).

The positive electrode current collector (12) can be a plate or foil. The positive electrode current collector (12) may be, for example, one metal or an alloy of two or more metals selected from indium, copper, magnesium, stainless steel, titanium, iron, cobalt, nickel, zinc, aluminum, germanium, and lithium.

The positive electrode active material layer (14) can reversibly adsorb and release lithium ions. The positive electrode active material layer (14) may include a positive electrode active material and a solid electrolyte.

The positive electrode active material may be a compound capable of inserting/removing lithium. Examples of compounds in which lithium can be inserted or removed include LiₐA_{1-b}B'_{b}D'₂ (wherein 0.90≤a≤1.8, and 0≤b≤0.5); LiₐE_{1-b}B'_{b}O_{2-c}D'_{c} (wherein 0.90≤a≤1.8, 0≤b≤0.5, and 0≤c≤0.05); LiE_{2-b}B'_{b}O_{4-c}D'_{c} (wherein 0≤b≤0.5, and 0≤c≤0.05); LiₐNi_{1-b-c}Co_{b}B'_{c}D'_{α} (wherein 0.90≤a≤1.8, 0≤b≤0.5, 0≤c≤0.05, and 0<α≤2); LiₐNi_{1-b-c}Co_{b}B'_{c}O_{2-α}F'_{α} (wherein 0.90≤a≤1.8, 0≤b≤0.5, 0≤c≤0.05, and 0<α < 2); LiₐNi_{1-b-c}Mn_{b}B'_{c}D'_{α} (wherein 0.90≤a≤1.8, 0≤b≤0.5, 0≤c≤0.05, and 0<α≤2); LiₐNi_{1-b-c}Mn_{b}B'_{c}O_{2-α}F'_{α} (wherein 0.90≤a≤1.8, 0≤b≤0.5, 0≤c≤0.05, and 0<α<2); LiₐNi_{b}E_{c}G_{d}O₂ (wherein 0.90≤a≤1.8, 0≤b≤0.9, 0≤c≤0.5, and 0.001≤d≤ 0.1); LiₐNi_{b}Co_{c}Mn_{d}GₑO₂ (wherein 0.90≤a≤1.8, 0≤b≤0.9, 0≤c≤0.5, 0≤d≤0.5, and 0.001≤e≤0.1); LiₐNiG_{b}O₂ (wherein 0.90≤a≤1.8, and 0.001≤b≤0.1); LiₐCoG_{b}O₂ (wherein 0.90≤a≤1.8, and 0.001≤b≤0.1); LiₐMnG_{b}O₂ (wherein 0.90≤a≤1.8, and 0.001≤b≤0.1); LiₐMn₂G_{b}O₄ (wherein 0.90≤a≤1.8, and 0.001≤b≤0.1); QO₂; QS₂; LiQS₂; V₂O₅; LiV₂O₅; LiI'O₂; LiNiVO₄; Li_{(3-f)}J₂(PO₄)₃ (wherein 0≤f≤2); Li_{(3-f)}Fe₂(PO₄)₃ (wherein 0≤f≤2); LiFePO₄; Li₄Ti₅O₁₂(LTO); and any one represented by one of the above formulae.

In the above formulae, A is Ni, Co, Mn, or a combination thereof; B' is Al, Ni, Co, Mn, Cr, Fe, Mg, Sr, V, a rare earth element, or a combination thereof; D' is O, F, S, P, or a combination thereof; E is Co, Mn, or a combination thereof; F' is F, S, P, or any combination thereof; G is Al, Cr, Mn, Fe, Mg, La, Ce, Sr, V, or any combination thereof; Q is Ti, Mo, Mn, or any combination thereof; I is Cr, V, Fe, Sc, Y, or any combination thereof; and J is V, Cr, Mn, Co, Ni, Cu, or any combination thereof.

Specific examples of the positive electrode active materials may include lithium cobalt oxide (hereinafter, referred to as LCO), lithium nickel oxide, lithium nickel cobaltate, lithium nickel cobalt aluminum oxide (hereinafter, referred to as NCA), lithium nickel cobalt manganate (hereinafter, referred to as NCM), lithium salts such as lithium manganate and lithium iron phosphate, and lithium sulfide. The positive electrode active material layer (14) may comprise only one selected from such compounds as a positive electrode active material, and may also comprise two or more therefrom.

The positive electrode active material may comprise a lithium salt of a transition metal oxide having a layered rock salt structure among the lithium salts described above. Here, "layered rock salt structure" is a structure in which oxygen atom layers and metal atom layers are arranged alternately and regularly in the direction of a cubic rock salt structure, resulting in each atom layer forming a two-dimensional plane. Also, "cubic rock salt structure" means a sodium chloride structure, which is one type of crystal structure. For example, "cubic rock salt structure" refers to a structure in which the face-centered cubic lattices are each formed by cations and anions are offset from each other by 1/2 of the edges of the unit lattice.

Lithium salts of transition metal oxides with such layered rock salt structures may include, for example, a ternary lithium transition metal oxide such as LiNiₓCo_{y}Al_{z}O₂(NCA) or LiNiₓCo_{y}Mn_{z}O₂(NCM) (wherein 0 < x < 1, 0 < y < 1, 0 < z < 1, and x + y + z = 1). The positive electrode active material layer (14) may include a lithium salt of a ternary transition metal oxide having such a layered rock salt structure as the positive electrode active material to improve the energy density and thermal stability of the all-solid-state lithium-ion secondary battery (100).

Here, the shape of the positive electrode active material can have, for example, a particle shape such as spherical, ellipsoidal, etc. In addition, the particle size of the positive electrode active material is not particularly limited and can be in the range applicable to the positive electrode active material of conventional all-solid-state lithium-ion secondary batteries. Furthermore, the content of the positive electrode active material in the positive electrode active material layer (14) is not particularly limited and can be within the range applicable to the positive electrode of a conventional all-solid-state lithium-ion secondary battery.

Of course, it is also possible to use a compound having a coating layer on the surface of the compound, or to use a mixture of the compound and a compound having a coating layer. The coating layer may comprise a coating element compound such as an oxide, hydroxide, oxyhydroxide, oxycarbonate, or hydroxycarbonate of a coating element. The compounds that make up these coating layers can be amorphous or crystalline. The coating elements included in the coating layer may be Mg, Al, Co, K, Na, Ca, Si, Ti, V, Sn, Ge, Ga, B, As, Zr, or mixtures thereof. The coating layer formation process can be carried out using any coating method (e.g., spray coating, dipping, etc.) provided that the compound can be coated with these elements in a way that does not adversely affect the properties of the positive electrode active material, which is well understood by those skilled in the art and will not be described in detail.

Specific examples of such coating layers may include Li₂O-ZrO₂.

The solid electrolyte included in the positive electrode active material layer (14) may be the same as or different from the solid electrolyte included in the solid electrolyte layer (30) described later.

The positive electrode active material layer (14) may also be a suitable formulation of additives such as, for example, conductive agents, binders, fillers, dispersants, or ionic conductivity aids, in addition to the positive electrode active material and solid electrolyte described above.

The conductive agent may be, for example, graphite, carbon black, acetylene black, Ketjen black, carbon fiber, or metal powder. The binder may also comprise, for example, styrene butadiene rubber (SBR), polytetrafluoroethylene, polyvinylidene fluoride, or polyethylene. In addition, any of the known materials typically used for electrodes of all-solid-state lithium-ion secondary batteries can be used as fillers, dispersants, or ionic conductivity aids.

### (2) Negative electrode

The negative electrode (20) may include a negative electrode current collector (22) and a negative electrode active material layer (24) which are disposed in turn toward the positive electrode (10).

The negative electrode current collector (22) can be a plate or foil. The negative electrode current collector (22) may include a material that does not react with lithium, i.e., does not form any of the alloys and compounds with lithium. Materials constituting the negative electrode current collector (22) may include, for example, copper, stainless steel, titanium, iron, cobalt, and nickel. The negative electrode current collector (22) may be composed of one of these metals, or may be composed of an alloy or clad material of two or more metals.

The negative electrode active material layer (24) may not include lithium in the negative electrode current collector (22), in the negative electrode active material layer (24), or between the negative electrode active material layer (24) and the solid electrolyte layer (30) in an initial state or in a state after a full discharge. As will be described later, when the all-solid-state lithium-ion secondary battery (100) according to one example is overcharged, the active material contained in the negative electrode active material layer (24) and the lithium ions that have migrated from the positive electrode (10) may form an alloy or compound, and a metal layer (26) having lithium as a major component may be formed (precipitated) on the negative electrode (20), as shown in FIG. 2. The metal layer (26) may be precipitated and disposed between the negative electrode current collector (22) and the negative electrode active material layer (24), within the negative electrode active material layer (24), or both. Between the negative electrode current collector layer (22) and the negative electrode active material layer (24), the metal layer (26) containing lithium as a major component may be disposed closer to the negative electrode current collector layer (22) than the negative electrode active material layer (24).

The negative electrode active material layer (24) may include carbon material particles, metal particles and metal oxide particles, and binders. By including the binder, the negative electrode active material layer (24) can be stabilized on the negative electrode current collector (22). The material which makes up the binder may be, for example, a resin material such as styrene butadiene rubber (SBR), polytetrafluoroethylene, polyvinylidene fluoride, polyethylene, or the like. The binder (binding agent) may comprise one or more selected from such resin materials.

The negative electrode active material layer (24) may also be suitably formulated with additives used in conventional all-solid-state lithium-ion secondary batteries, such as fillers, dispersants, ion conductors, and the like. Specific examples of the additives are the same as described above for the positive electrode.

The overall thickness of the negative electrode active material layer (24) is not particularly limited, but may be 1 µm to 100 µm, or 10 µm to 60 µm. If the thickness of the negative electrode active material layer (24) becomes less than 1 µm, the performance of the all-solid-state secondary battery may not be sufficiently improved. If the thickness of the negative electrode active material layer (24) exceeds 100 µm, the resistance of the negative electrode active material layer (24) may be high, and consequently, the performance of the all-solid-state secondary battery may not be sufficiently improved. Using the binders described above, the negative electrode active material layer (24) can be easily achieved at a suitable thickness.

Meanwhile, the negative electrode current collector (22) may further comprise a film comprising a material capable of forming an alloy or compound with lithium, wherein the film can be disposed between the negative electrode current collector (22) and the negative electrode active material layer.

The negative electrode current collector (22) does not react with lithium metal, but may make it difficult to precipitate a smooth lithium metal layer on top. The film may also be used as a wetting layer to cause the lithium metal to precipitate flatly on top of the negative electrode current collector (22).

Materials capable of forming an alloy with the lithium metal used in the film may include silicon, magnesium, aluminum, lead, silver, tin, or combinations thereof. The material capable of forming a compound with the lithium metal used in the film may include carbon, titanium sulfide, iron sulfide, or a combination thereof. The content of the material used in the film may be in small amounts, within the limits of not affecting the electrochemical properties and/or the redox potential of the electrode. The film may be applied flatly on the negative electrode current collector (22) to prevent cracking during charging cycles of the all-solid-state lithium-ion secondary battery (100). The application of the film may be performed by physical deposition, such as evaporation or sputtering, chemical deposition, or plating.

The thickness of the film may be 1 nm to 500 nm. The thickness of the film may be, for example, 2 nm to 400 nm. The thickness of the film may be, for example, 3 nm to 300 nm. The thickness of the film may be, for example, 4 nm to 200 nm. The thickness of the film may be, for example, 5 nm to 100 nm.

### (3) Solid electrolyte layer

The solid electrolyte layer (30) is disposed between the positive electrode (10) and the negative electrode (20) (e.g., between the positive electrode active material layer (14) and the negative electrode active material layer (24)). The solid electrolyte layer (30) includes a solid electrolyte capable of migrating ions. The solid electrolyte layer (30) may comprise a sulfide-based solid electrolyte.

The sulfide-based solid electrolyte may be Li₂S-P₂S₅, Li₂S-P₂S₅-LiX (wherein X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wherein m and n are positive numbers, and Z is one of Ge, Zn, or Ga), Li₂S-GeS₂, Li₂S-SiS₂-Li₃PO₄, Li₂S-SiS₂-LiₚMO_{q} (wherein p and q are positive numbers, and M is one of P, Si, Ge, B, Al, Ga, or In), or any combination thereof. The solid electrolyte may comprise one material selected from such sulfide-based solid electrolyte materials, or may comprise two or more materials selected therefrom.

The sulfide-based solid electrolyte may include a solid electrolyte represented by Formula 1 below:

<Formula 1> LiₓM'_{y}PS_{z}A_{w}

wherein x, y, z, and w are independently between 0 to 6, inclusive;
M' is at least one of As, Ge, Ga, Sb, Si, Sn, Al, In, Ti, V, Nb, or Ta; and
A is at least one of F, Cl, Br, or I.

As the solid electrolyte, a sulfide-based solid electrolyte material comprising sulfur (S), phosphorus (P) and lithium (Li) can be utilized as a component. For example, one that contains Li₂S-P₂S₅ can be used. When utilizing one comprising Li2S-P2S5 as a sulfide-based solid electrolyte material, the mixing molar ratio of Li2S and P2S5 may be selected in the range of, for example, 50:50 to 90:10.

Also, the solid electrolyte may be in an amorphous state or a crystalline state. It can also be a mixture of amorphous and crystalline.

The solid electrolyte layer (30) may further comprise a binder (binding agent). Examples of the binder (binding agent) materials may include resins such as styrene butadiene rubber (SBR), polytetrafluoroethylene, polyvinylidene fluoride, polyethylene, polyacrylic acid, and the like. The binder (binding agent) material may be the same as the material comprising the binder in the positive electrode active material layer (14) and the negative electrode active material layer (24), or it may be different.

### (4) Composition of an all-solid-state lithium-ion secondary battery

The all-solid-state lithium-ion secondary battery (100) of the present invention may be an all-solid-state lithium-ion secondary battery (100) comprising a positive electrode (10), a solid electrolyte layer (30), and a negative electrode (20), in that order, as shown in FIG. 1.

### <Method of manufacturing an all-solid-state lithium-ion secondary battery>

Next, a method of manufacturing the all-solid-state lithium-ion secondary battery (100) will be described. The all-solid-state lithium-ion secondary battery (100) according to one example can be obtained by fabricating a positive electrode (10), a negative electrode (20), and a solid electrolyte layer (30), respectively, and then laminating each of the above layers.

### (1) Process of manufacturing a positive electrode

An example of the process of manufacturing a positive electrode is as follows. First, the materials constituting the positive electrode active material layer (14) (positive electrode active material, binder, etc.) are added to a non-polar solvent to form a slurry (or paste). The obtained slurry is then applied to the prepared positive electrode current collector (12). This is dried to obtain a laminate. The obtained laminate is then pressurized, for example, using hydrostatic pressure, to obtain the positive electrode (10). In this case, the pressurization process is omitted.

### (2) Process of manufacturing a negative electrode

An example of the process of manufacturing a negative electrode is as follows. First, the materials constituting the negative electrode active material layer (24) (carbon material particles, metal particles, metal oxide particles, binders, etc.) are added to a polar solvent or a non-polar solvent to prepare a slurry (preferably a paste). The obtained slurry is then applied to the prepared negative electrode current collector (22) to form a negative electrode active material layer.

If the negative electrode active material layer further comprises one or more layers, the additional layers may be stacked in the same manner as above.

The laminate obtained by the above method is then pressurized, for example, using hydrostatic pressure, to produce the negative electrode (20). Also, the pressurization process can be omitted. Furthermore, the method of applying the slurry to the negative electrode current collector (22) is not particularly limited and may include, for example, screen printing, metal mask printing, electrostatic painting, dip coating, spray coating, roll coating, doctor blade, gravure coating, and the like.

The method of forming a negative electrode active material layer in two layers was described above, but even in the case of forming additional layers, the negative electrode can be produced by preparing a slurry to form each layer and sequentially stacking each layer according to the stacking sequence using the method described above.

### (3) Process of manufacturing a solid electrolyte layer

The solid electrolyte layer (30) can be fabricated by a solid electrolyte comprising, for example, a sulfide-based solid electrolyte material.

First, the starting material (e.g., Li₂S, P₂S₅, etc.) is processed by melt quenching or mechanical milling to obtain a sulfide-based solid electrolyte material. For example, when using the melt quenching method, a sulfide-based solid electrolyte material can be prepared by mixing a predetermined amount of starting materials, pelletizing them, reacting them at a predetermined reaction temperature in a vacuum, and quenching them. Further, the reaction temperature of the mixture of Li₂S and P₂S₅ may be 400°C to 1000°C, such as 800°C to 900°C. Furthermore, the reaction time can be 0.1 to 12 hours, for example, 1 to 12 hours. Further, the quenching temperature of the reactants may be 10°C or less, such as 0°C or less, and the quenching rate may be typically 1°C/sec to 10000°C/sec, such as 1°C/sec to 1000°C/sec.

In addition, when mechanical milling is used, a sulfide-based solid electrolyte material can be prepared by stirring and reacting the starting materials using a ball mill or the like. In addition, the stirring speed and stirring time of the mechanical milling method are not particularly limited, but the faster the stirring speed, the faster the sulfide-based solid electrolyte material can be produced, and the longer the stirring time, the higher the conversion rate of raw materials into sulfide-based solid electrolyte materials.

The obtained mixed raw material (sulfide-based solid electrolyte material) is then heat-treated at a predetermined temperature, and then crushed to produce a particle-shaped solid electrolyte. If a solid electrolyte has a glass transition point, it may change from amorphous to crystalline by heat treatment.

The solid electrolyte obtained by the above method can then be used to prepare the solid electrolyte layer (30) by film deposition using a known film deposition method, for example, an aerosol positioning method, a cold spray method, a sputtering method, or the like. Additionally, the solid electrolyte layer (30) may be prepared by pressurizing solid electrolyte particles. Furthermore, the solid electrolyte layer (30) can be prepared by mixing a solid electrolyte with a solvent and a binder, and applying, drying and pressing them.

### (4) Laminating process

An all-solid-state lithium-ion secondary battery (100) according to one example can be obtained by disposing a solid electrolyte layer (30) between the positive electrode (10) and the negative electrode (20) and pressurizing it, for example, using hydrostatic pressure or the like.

The all-solid-state lithium-ion secondary battery (100) of the present invention does not require high external pressure to be applied using an end plate, and can provide improved discharge capacity even if the external pressure applied to the positive electrode (10), the negative electrode (20), and the solid electrolyte layer (30) is 1 MPa or less when used.

### <Method of charging an all-solid-state lithium-ion secondary battery>

Next, a method for charging the all-solid-state lithium-ion secondary battery (100) will be described.

A method of charging the all-solid-state lithium-ion secondary battery (100) according to one example may be to charge (i.e., overcharge) the all-solid-state lithium-ion secondary battery (100) beyond the charging capacity of the negative electrode active material layer (24).

In the early stage of charging, lithium may be adsorbed within the negative electrode active material layer (24). Charging beyond the charge capacity of the negative electrode active material layer (24) may cause lithium to precipitate on the back side of the negative electrode active material layer (24), that is, between the negative electrode current collector (22) and the negative electrode active material layer (24), and this lithium may form a metal layer (26) that was not present at the time of manufacture, as shown in FIG. 2. During discharge, lithium in the negative electrode active material layer (24) and metal layer (26) can be ionized and migrate to the positive electrode (10) side. Therefore, in the all-solid-state lithium-ion secondary battery (100) of the present invention, lithium can be used as the negative electrode active material. In addition, since the negative electrode active material layer (24) coats the metal layer (26), it can function as a protective layer for the metal layer (26) and inhibit precipitation and growth of dendritic metallic lithium. In this way, short circuits and capacity degradation of the all-solid-state lithium-ion secondary battery (100) can be suppressed, and furthermore, the characteristics of the all-solid-state lithium-ion secondary battery (100) can be improved. Furthermore, according to one example, the metal layer (26) is not pre-formed, which can reduce the manufacturing cost of the all-solid-state lithium-ion secondary battery (100).

Further, the metal layer (26) is not limited to being formed between the negative electrode current collector (22) and the negative electrode active material layer (24) as shown in FIG. 2, but may also be formed on the interior of the negative electrode active material layer (24). Additionally, the metal layer (26) may be formed both between the negative electrode current collector (22) and the negative electrode active material layer (24) and inside the negative electrode active material layer (24).

The all-solid-state lithium-ion secondary battery (100) of the present invention may be fabricated as a unit cell with a structure of positive electrode/separator/negative electrode, a bicell with a structure of positive electrode/separator/negative electrode/separator/positive electrode, or a stacked cell in which the structure of the unit cell is repeated.

The shape of the all-solid-state lithium-ion secondary battery (100) of the present invention is not particularly limited, and can be, for example, coin-shaped, button-shaped, sheet-shaped, stacked, cylindrical, flat, horn-shaped, and the like. It can also be applied to large-scale batteries used in electric vehicles. For example, the all-solid-state lithium-ion secondary battery (100) can also be used in hybrid vehicles, such as plug-in hybrid electric vehicles (PHEVs). It can also be used in applications that require large amounts of power storage. For example, it could be used for electric bikes or power tools.

### [Mode for Practicing the Invention]

Hereinafter, the present invention will be described with reference to examples to illustrate the invention in detail. However, examples according to the present invention may be modified in many other ways, and the scope of the present invention should not be construed as being limited to the examples described below. The examples of the present invention are provided to more fully illustrate the invention to one of ordinary skill in the art.

### Example 1: Manufacturing a negative electrode active material slurry

6 g of carbon black with a particle size (D50) of 41 nm, 0.125 g of Ag with a particle size (D50) of 10 nm to 60 nm, 1 g of ZnO with a particle size (D50) of 10 nm to 60 nm, 9.33 g of PVdF binder (6% solids), and 13 g of NMP solvent were placed in a Thinky mixer container and mixed 12 times at 1800 rpm for 3 minutes each. Then, an additional 6 g of NMP solvent was added and mixed five times at 1800 rpm for 3 min each to prepare the negative electrode active material slurry of Example 1.

### Example 2: Manufacturing a negative electrode active material slurry

6 g of carbon black with a particle size (D50) of 41 nm, 1 g of Ag with a particle size (D50) of 10 nm to 60 nm, 1 g of ZnO with a particle size (D50) of 10 nm to 60 nm, 9.33 g of PVdF binder (6% solids), and 13 g of NMP solvent were placed in a Thinky mixer container and mixed 12 times at 1800 rpm for 3 minutes each. Then, an additional 6 g of NMP solvent was added and mixed five times at 1800 rpm for 3 min each to prepare the negative electrode active material slurry of Example 2.

### Example 3: Manufacturing a negative electrode active material slurry

6 g of carbon black with a particle size (D50) of 41 nm, 1 g of Ag with a particle size (D50) of 10 nm to 60 nm, 2.375 g of ZnO with a particle size (D50) of 10 nm to 60 nm, 9.33 g of PVdF binder (6% solids), and 13 g of NMP solvent were placed in a Thinky mixer container and mixed 12 times at 1800 rpm for 3 minutes each. Then, an additional 6 g of NMP solvent was added and mixed five times at 1800 rpm for 3 min each to prepare the negative electrode active material slurry of Example 3.

### Example 4: Manufacturing a negative electrode active material slurry

The negative electrode active material slurry was prepared in the same manner as in Example 2, except that Ti with a particle size (D50) of 10 nm to 20 nm was used instead of Ag with a particle size (D50) of 10 nm to 60 nm, and TiO₂ with a particle size (D50) of 10 nm to 100 nm was used instead of ZnO with a particle size (D50) of 10 nm to 60 nm.

### Example 5: Manufacturing a negative electrode active material slurry

The negative electrode active material slurry was prepared in the same manner as in Example 2, except that In with a particle size (D50) of 10 nm to 100 nm was used instead of Ag with a particle size (D50) of 10 nm to 60 nm, and Al₂O₃ with a particle size (D50) of 10 nm to 100 nm was used instead of ZnO with a particle size (D50) of 10 nm to 60 nm.

### Comparative Example 1: Manufacturing a negative electrode active material slurry

6.675 g of carbon black with a particle size (D50) of 41 nm, 1.125 g of Ag with a particle size (D50) of 10 nm to 60 nm, 9.33 g of PVdF binder (6% solids), and 13 g of NMP solvent were placed in a Thinky mixer container and mixed 12 times at 1800 rpm for 3 minutes each. Then, an additional 6 g of NMP solvent was added and mixed five times at 1800 rpm for 3 min each to prepare the negative electrode active material slurry.

### Comparative Example 2: Manufacturing a negative electrode active material slurry

6.675 g of carbon black with a particle size (D50) of 41 nm, 2g of ZnO with a particle size (D50) of 10 nm to 60 nm, 9.33 g of PVdF binder (6% solids), and 13 g of NMP solvent were placed in a Thinky mixer container and mixed 12 times at 1800 rpm for 3 minutes each. Then, an additional 6 g of NMP solvent was added and mixed five times at 1800 rpm for 3 min each to prepare the negative electrode active material slurry.

### Comparative Example 3: Manufacturing a negative electrode active material slurry

3.5 g of carbon black with a particle size (D50) of 41 nm, 1 g of Ag with a particle size (D50) of 10 nm to 60 nm, 3 g of ZnO with a particle size (D50) of 10 nm to 60 nm, 9.33 g of PVdF binder (6% solids), and 13 g of NMP solvent were placed in a Thinky mixer container and mixed 12 times at 1800 rpm for 3 minutes each. Then, an additional 6 g of NMP solvent was added and mixed five times at 1800 rpm for 3 min each to prepare the negative electrode active material slurry.

### Examples 6 to 10 and Compare Examples 4 to 6: Manufacturing of a negative electrode

A negative electrode (0.9 mAh/cm²) was prepared by blade coating each of the negative electrode slurries prepared in Examples 1 to 5 and Comparative Examples 1 to 3 with a thickness of 10 µm on SUS foil and drying.

### Manufacturing the all-solid-state lithium-ion secondary batteries of Examples 11 to 15 and Comparative Examples 7 to 9

Pouch-type monocell was fabricated by using a positive electrode loaded with 6 mAh/cm² in the current collector by mixing NCM and argyrodite-based electrolyte at a 5.7:1 weight ratio as the positive electrode active material, the respective negative electrodes prepared in Examples 6 to 10 and Comparative Examples 4 to 6 as the negative electrode, and sulfide-based all-solid-state electrolyte (LPSCI composition) as the electrolyte.

### Experimental Example 1: Evaluating the characteristics of a battery

The following experiments were performed on the pouch-type monocells prepared in Examples 11 to 13 and Comparative Examples 7 to 9, and the results are shown in Table 2 below.

### (1) Evaluating initial efficiency

The pouch-type monocell was charged at a C-rate of 0.1C until the voltage reached 4.25V (vs. Li) and then cut-off at a rate of 0.05C while maintaining 4.25V (vs. Li). It was then discharged at a rate (C-rate) of 0.1C until the voltage at discharge was 3.0V (vs. Li) (1^{st} cycle). The initial efficiency was calculated as discharge capacity/charge capacity X 100 (%).

### (2) Evaluating discharge capacity

The pouch-type monocell was operated over a working voltage range of 4.25V-3.0V and an operating temperature of 60°C to evaluate its cycle characteristics.

### (3) Evaluating lifetime performance

The pouch-type monocell was charged at a rate (C-rate) of 0.33C at an operating temperature of 60°C until the voltage reached 4.25V (vs. Li) and then cut-off at a rate of 0.1C while maintaining 4.25V (vs. Li). It was then discharged at a rate (C-rate) of 0.33C until the voltage at discharge was 3.0V (vs. Li) (1^{st} cycle). This charge and discharge test was repeated for 20 cycles to measure the capacity retention of the discharge capacity.

**[Table 2]**

| Battery | Active material | Initial efficiency (%) | Discharge capacity (%) | | | | Capacity retention at 20 cycles (%) |
|---|---|---|---|---|---|---|---|
| | | | 0.1 C | 0.33 C | 0.5 C | 1.0 C | |
| Example 11 | Active material prepared in Example 1 | 86.2 | 100 | 98.32 | 96.1 | 90.76 | 95.47 |
| Example 12 | Active material prepared in Example 2 | 86.1 | 100 | 97.11 | 94.42 | 87.03 | 93.82 |
| Example 13 | Active material prepared in Example 3 | 87.0 | 100 | 98.13 | 96.62 | 92.76 | 96.65 |
| Comparative Example 7 | Active material prepared in Comparative Example 1 | 80.5 | 100 | 95.92 | 88.14 | 81.65 | 85.1 |
| Comparative Example 8 | Active material prepared in Comparative Example 2 | 76.9 | 100 | 97.3 | 92.9 | 85.7 | 90.87 |
| Comparative Example 9 | Active material prepared in Comparative Example 3 | 81.7 | 100 | 96.9 | 93.7 | 84.1 | *Cell short occurred |

## Claims

1. A negative electrode comprising a current collector and an active material layer,
wherein the active material layer comprises carbon material particles, metal particles, and metal oxide particles.

2. The negative electrode according to claim 1,
wherein a weight ratio of a weight of the carbon material particles and a total weight of the metal particles and the metal oxide particles included in the active material layer is 5.1 to 8.5 : 1.5 to 4.9.

3. The negative electrode according to claim 2,
wherein the metal particles and metal oxide particles are included in a weight ratio of 1 : 1 to 10.

4. The negative electrode according to claim 1,
wherein the carbon material particles are amorphous carbon material particles.

5. The negative electrode according to claim 4,
wherein the particles are are at least one selected from the group consisting of Al, Zn, Ag, Li, In, and Ti,
wherein the metal oxide particles are at least one selected from the group consisting of Al₂O₃, ZnO, AgO, Li₂O, TiO₂, In₂O₃, and GeO₂.

6. The negative electrode according to claim 1,
wherein the carbon material particles, metal particles, and metal oxide particles in the active material are randomly mixed.

7. The negative electrode according to claim 1,
wherein the active material layer comprises 55 to 85% by weight carbon material particles, 13 to 43% by weight metal particles and metal oxide particles, and 2 to 12% by weight binder.

8. The negative electrode according to claim 1,
wherein the carbon material particles comprise 3 to 10 at% oxygen.

9. A lithium-ion secondary battery comprising a negative electrode according to claim 1; a positive electrode; and an electrolyte disposed between the negative electrode and positive electrode.

10. The lithium-ion secondary battery according to claim 9,
wherein the electrolyte comprises a sulfide-based solid electrolyte.

11. The lithium-ion secondary battery according to claim 10,
wherein the lithium-ion secondary battery is an anodeless battery.
